# EUROPÄISCHE PATENTSCHRIFT

(11) **EP 3 255 319 B1**
(45) Veröffentlichungstag und Bekanntmachung des Hinweises auf die Patenterteilung: **09.10.2019**
(21) Anmeldenummer: 17000806.4
(22) Anmeldetag: 10.05.2017
(51) Int. Cl.: F16J 15/00, F16J 15/40

(54) **WELLENDICHTUNGSANORDNUNG**
SHAFT SEAL ASSEMBLY
SYSTÈME D'ÉTANCHÉITÉ D'ARBRE

(30) Priorität: 09.06.2016 DE 102016007009
(43) Veröffentlichungstag der Anmeldung: 13.12.2017
(73) Patentinhaber: NETZSCH-Feinmahltechnik GmbH, 95100 Selb (DE)
(72) Erfinder: Goller, Thomas, 94126 Schwarzenbach/Saale (DE); Bauer, Rainer, 95182 Döhlau (DE); Enderle, Udo, 95659 Arzberg (DE)

(56) Entgegenhaltungen:
- WO-A1-2011/075999
- DE-A1-102007 021 407
- US-A- 4 629 196
- US-A1- 2001 045 705

## Beschreibung

Die vorliegende Erfindung betrifft eine Wellendichtungsanordnung, insbesondere für Vakuum-Dissolver.

Vakuum-Dissolver sind Mischeinrichtungen zum Vermischen von Materialien bei einem Druck unterhalb des Atmosphärendrucks mittels eines schneillaufenden Mischorgans. Zu diesem Zweck weist ein Vakuum-Dissolver einen Unterdruckbehälter auf, in den sich eine Welle erstreckt, an der das schnelllaufende Mischorgan angebracht ist. Eine Weitendichtungsanordnung dient zur Abdichtung der Welle zwischen dem Unterdruckbehälter und der umgebenden Atmosphäre. Die Welle hat einen sich in den Unterdruckbehälter erstreckenden Endabschnitt und einen außerhalb des Unterdruckbehälters befindlichen Antriebsabschnitt, der zur Verbindung mit einem Drehantrieb vorgesehen ist. Die Wellendichtungsanordnung umfasst eine erste, antriebsabschnittseitige Wellendichtung und eine zweite, unterdruckbehäiterseitige Wellendichtung, die zwischen sich eine Dichtungskammer begrenzen.

DE 102007021407 A1 offenbart eine Wellendichtungsanordnung gemäß dem Oberbegriff des Anspruchs 1.

Insbesondere dann, wenn die zu vermischenden Materialien zur Entzündung neigen, darf die Temperatur der WeHendichtungsanordnung im Betrieb bestimmte Werte nicht übersteigen. Eine Möglichkeit zur Temperaturabsenkung der Wellendichtungsanordnung im Betrieb besteht darin, die Drehzahl zu begrenzen, mit der sich die Welle dreht. Dies führt jedoch zwangsläufig zu einer schlechteren oder zumindest langsameren Vermischung der zu mischenden Materialien.

Der Erfindung liegt die Aufgabe zugrunde, eine Wellendichtungsanordnung mit einem Unterdruckbehälter und einer sich in diesen hinein erstreckenden, schneillaufenden Welle so zu gestalten, dass auch bei hohen Wellendrehzahlen und/oder starkem Unterdruck im Unterdruckbehälter eine vorgegebene Wellendichtungstemperatur nicht überschritten wird.

Zur Lösung dieser Aufgabe schlägt die Erfindung eine Wellendichtungsanordnung mit den im Patentanspruch 1 angegebenen Merkmalen vor. Die erfindungsgemäße Wellendichtungsanordnung zeichnet sich dadurch aus, dass eine Luftzuführungsleitung mit einem vorgegebenen Innendurchmesser und einer vorgegebenen Länge zur Verbindung mit einer Druckluftquelle mit einem im Wesentlichen konstanten Überdruck vorgesehen ist, wobei die Luftzuführungsleitung in der zwischen der ersten Wellendichtung und der zweiten Wellendichtung gebildeten Dichtungskammer endet. Die erfindungsgemäße Wellendichtungsanordnung zeichnet sich ferner durch eine Luftabführungsleitung mit einem vorgegebenen Innendurchmesser und einer vorgegebenen Länge aus, die die Dichtungskammer mit dem Unterdruckbehälter verbindet. Der Innendurchmesser und die Länge der Luftzuführungsleitung sind solchermaßen dimensioniert, dass bei Atmosphärendruck im Unterdruckbehälter der im Wesentlichen konstante Überdruck der Druckluftquelle am dichtungskammerseitigen Ende der Luftzuführungsleitung auf einen geringfügigen Überdruck reduziert ist. Der Innendurchmesser und die Länge der Luftabführungsleitung sind solchermaßen dimensioniert, dass bei Vorhandensein eines Unterdrucks im Unterdruckbehälter der Druck in der Dichtungskammer immer zwischen dem Unterdruck und Atmosphärendruck liegt. Die Begriffe "Überdruck" und "Unterdruck" sind im Rahmen der vorliegenden Offenbarung immer bezogen auf den jeweils vorliegenden Atmosphärendruck zu verstehen, d. h. ein Überdruck ist ein über dem jeweiligen Umgebungsdruck liegender Druck, während ein Unterdruck ein Druck ist, der niedriger als der Umgebungsdruck ist.

Bei der Luftzuführungsleitung und der Luftabführungsleitung handelt es sich somit jeweils um eine Drosseleinrichtung, die einen geeigneten Druckabfall erzeugt. Statt der Luftzuführungsleitung und/oder der Luftabführungsleitung, die mittels ihres vorgegebenen Innendurchmessers und einer vorgegebenen Länge auf einen bestimmten Druckabfall hin ausgelegt sind, ist es daher auch möglich, anders geartete Drosseln zu verwenden, mit denen ein gewünschter Druckabfall realisiert werden kann.

Mittels der erfindungsgemäßen Wellendichtungsanordnung wird bei Vorliegen eines Unterdrucks im Unterdruckbehälter immer ein geringer Luftdurchfluss von der Druckluftquelle durch die Dichtungskammer in den Unterdruckbehälter aufrechterhalten, der dafür sorgt, dass die an den beiden Wellendichtungen im Betrieb anliegenden Druckdifferenzen nicht zu groß werden. Im Betrieb steigt die Temperatur der Wellendichtung mit zunehmender Wellendrehzahl. Liegt zudem an einer Wellendichtung eine große Druckdifferenz an, kann es zu einem übermäßigen Temperaturanstieg der Wellendichtung kommen, der insbesondere dann nicht mehr tolerierbar ist, wenn entzündliche Materialien vermischt werden sollen. In jedem Fall führt eine zu hohe Wellendichtungstemperatur im Betrieb zu schnellerem Verschleiß und ist schon deshalb unerwünscht. Mittels der erfindungsgemäßen Wellendichtungsanordnung wird die an jeder Wellendichtung anliegende Druckdifferenz so begrenzt, dass es unter allen Betriebszuständen, d. h. auch bei hoher Wellendrehzahl und großem Unterdruck im Unterdruckbehälter, zu keiner nicht tolerierbaren Temperaturerhöhung der Weitendichtungsanordnung mehr kommt. Vorzugsweise wird die an jeder Wellendichtung maximal anliegende Druckdifferenz auf ≤ 0,5 bar begrenzt. Der sich aus dem Luftdurchfluss in dem Unterdruckbehälter ergebende Unterdruckabfall (d. h. eine Verringerung des Unterdrucks) fällt in der Praxis nicht störend ins Gewicht, da dieser Luftstrom im Verhältnis zur Unterdruckleistung einer den Unterdruck im Unterdruckbehälter erzeugenden Unterdruckquelle gering ist.

Die vorliegende Erfindung stellt somit eine Wellendichtungsanordnung bereit, die es ohne eine teure und potentiell störanfälligere Druckregelung erlaubt, die Wellendichtungsanordnung unter schwierigen Betriebsbedingungen, d. h. bei hohen Wellendrehzahlen und starkem Unterdruck im Unterdruckbehälter, zu betreiben und dennoch die Temperatur der Wellendichtungen niedrig zu halten.

Vorzugsweise enthält die Luftabführungsleitung ein Überdruckventil, welches jeglichen Überdruck aus der Luftabführungsleitung ablässt. Mittels eines solchen Überdruckventils in der Luftabführungsleitung kann eine permanente Spülung der zwischen den beiden Wellendichtungen gebildeten Dichtungskammer auch dann erfolgen, wenn im Unterdruckbehälter Atmosphärendruck herrscht.

Der im Wesentlichen konstante Überdruck der Druckluftquelle kann beispielsweise 0,2 bar betragen. Grundsätzlich kann jedoch eine Druckluftquelle mit nahezu jedem beliebigen Überdruckniveau verwendet werden, denn es ist beispielsweise mittels eines der Druckluftquelle nachgeschalteten Druckminderers ohne weiteres möglich, einen gewünschten eingangsseitigen Überdruck einzustellen.

Wenn im Rahmen der vorliegenden Offenbarung die Begriffe "Luftzuführungsleitung", "Luftabführungsleitung" und "Luftdurchfluss" verwendet werden, versteht es sich, dass statt Luft auch ein anderes Gas zum Einsatz kommen kann, beispielsweise Stickstoff.

Bei bevorzugten Ausgestaltungen der erfindungsgemäßen Weilendichtungsanordnung liegt der geringfügige Überdruck am dichtungskammerseitigen Ende der Luftzuführungsleitung im Bereich von 0,01 bis 0,1 bar, vorzugsweise im Bereich von 0,03 bis 0,07 bar, und besonders bevorzugt im Bereich von 0,04 bis 0,06 bar. Mit geringfügigen Überdrücken in den angegebenen Bereichen kann die gewünschte Druckentlastung der Wellendichtungen gut erreicht werden.

Vorzugsweise ist in der Luftabführungsleitung an der Dichtungskammer oder nahe derselben ein Durchflusswächter angeordnet. Mittels eines solchen Durchflusswächters kann ständig kontrolliert werden, ob die zur Druckentlastung der beiden Wellendichtungen erforderliche Spülung der Dichtungskammer stattfindet, d. h. ob ein Luftdurchfluss von der Druckluftquelle durch die Dichtungskammer stattfindet. Stellt der Durchflusswächter eine Unterschreitung einer vorgegebenen Mindestdurchflussmenge fest, so kann basierend auf einem entsprechenden Signal des Durchflusswächters die Ausgabe einer Fehlermeldung und/oder eines Warnsignals erfolgen. Gemäß einer Weiterbildung kann eine Notabschaltung der Mischeinrichtung erfolgen, um einen Anstieg der Wellendichtungsanordnungstemperatur in kritische Bereiche zu verhindern.

Alternativ und/oder zusätzlich zu einem Durchflusswächter kann ein Drucksensor zum Erfassen des Drucks in der Dichtungskammer vorhanden sein. Bei Kenntnis des Drucks im Unterdruckbehälter lässt sich mittels eines solchen Drucksensors feststellen, ob die erfindungsgemäße Wellendichtungsanordnung ordnungsgemäß druckentlastet wird oder nicht.

Bei bevorzugten Ausgestaltungen erfindungsgemäßer Wellendichtungsanordnungen ist ein Temperatursensor zum Erfassen der Temperatur der ersten Wellendichtung und/oder der zweiten Wellendichtung vorhanden. Mittels solcher Temperatursensoren lässt sich vorteilhaft unmittelbar die Temperatur der jeweiligen Wellendichtung kontrollieren und dadurch sicherstellen, dass bei einer Überschreitung einer vorgegebenen Temperatur Gegenmaßnahmen ergriffen werden können.

Gemäß einer besonders bevorzugten Ausführungsform der erfindungsgemäßen Weltendichtungsanordnung ist die erste Wellendichtung und/oder die zweite Wellendichtung jeweils ein herkömmlicher Wellendichtring.

Ein Ausführungsbeispiel einer erfindungsgemäßen Wellendichtungsanordnung wird im Folgenden anhand der einzigen, schematischen Figur näher erläutert.

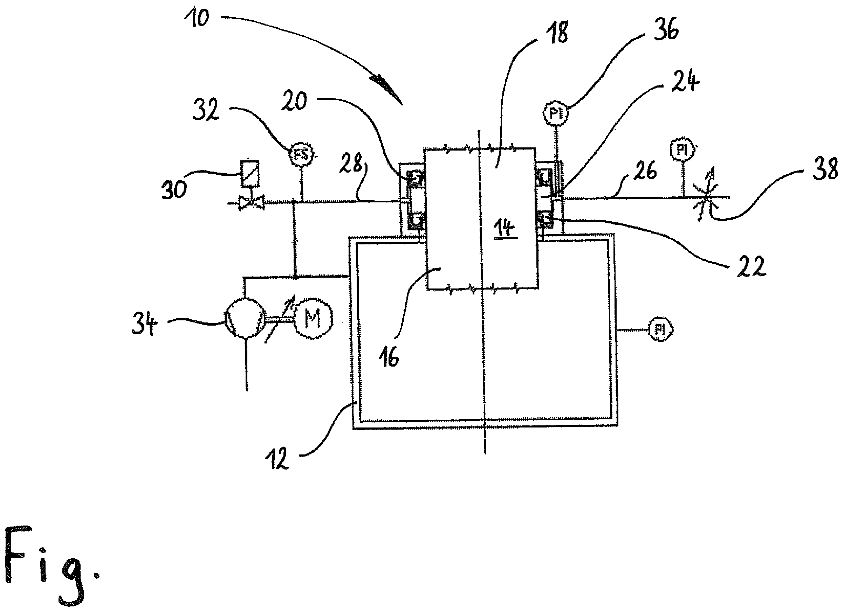

Die Figur zeigt schematisch eine Wellendichtungsanordnung 10, die im gezeigten Ausführungsbeispiel Teil eines Vakuum-Dissolvers ist. Die Wellendichtungsanordnung 10 umfasst einen Unterdruckbehälter 12, in den sich eine hier übertrieben groß dargestellte Welle 14 von außen hinein erstreckt. Die Welle 14 weist somit einen sich in den Unterdruckbehälter 12 erstreckenden Endabschnitt 16 und einen außerhalb des Unterdruckbehälters 12 befindlichen Antriebsabschnitt 18 auf, der zur Verbindung mit einem hier nicht dargestellten Drehantrieb vorgesehen ist. Der Drehantrieb kann beispielsweise ein Elektromotor sein, der mit dem Antriebsabschnitt 18 der Welle 14 unmittelbar oder mittelbar gekoppelt ist, z. B. durch Zwischenschaltung eines Getriebes. Am Endabschnitt 16 der Welle 14 sind ein oder mehrere, hier nicht gezeigte Mischorgane befestigt, die sich mit der Welle 14 drehen und zum Vermischen von im Unterdruckbehälter 12 befindlicher Materialien dienen.

Zur Abdichtung der Welle 14 zwischen dem Unterdruckbehälter 12 und der Umgebungsatmosphäre dienen zwei Wellendichtungen, eine erste, antriebsabschnittsseitige Wellendichtung 20 und eine zweite, unterdruckbehälterseitige Wellendichtung 22, die im gezeigten Ausführungsbeispiel als Wellendichtringe ausgeführt sind. Die erste Wellendichtung 20 und die zweite Wellendichtung 22 begrenzen in axialer Richtung gesehen zwischen sich eine Dichtungskammer 24. In die Dichtungskammer 24 mündet eine Luftzuführungsleitung 26, deren anderes, eingangsseitiges Ende zur Verbindung mit einer Druckluftquelle (nicht dargestellt) vorgesehen ist, die einen zumindest im Wesentlichen konstanten Überdruck bereitstellt. Aus der Dichtungskammer 24 heraus führt eine Luftabführungsleitung 28, die die Dichtungskammer 24 mit dem Unterdruckbehälter 12 verbindet.

Die Dichtungskammer 24 dient im Verbindung mit der Luftzuführungsleitung 26 und der Luftabführungsleitung 28 dazu, den Raum zwischen den beiden Wellendichtungen 20 und 22 mittels eines Gasstroms zu spülen und dafür zu sorgen, dass in Betriebszuständen, in denen im Unterdruckbehälter 12 starker Unterdruck vorliegt, die an den Wellendichtungen 20 und 22 anliegende Druckdifferenz einen bestimmten Wert nicht überschreitet. Dieser Wert kann beispielsweise 0,5 bar betragen. Hierzu weist die Luftzuführungsleitung 26 einen Innendurchmesser d₁ und eine Länge l₁ auf, die solchermaßen dimensioniert sind, dass bei Atmosphärendruck im Unterdruckbehälter 12 der von der Druckluftquelle gelieferte, im Wesentlichen konstante Überdruck am dichtungskammerseitigen Ende der Luftzuführungsleitung 26 auf einen nur noch geringfügigen Überdruck reduziert ist. Im gezeigten Ausführungsbeispiel beträgt der Wert des von der Druckluftquelle bereitgestellten, im Wesentlichen konstanten Überdrucks 0,2 bar und der geringfügige Überdruck, der sich am in die Dichtungskammer 24 einmündenden Ende der Luftzuführungsleitung 26 einstellt, liegt im Bereich von 0,01 bis 0,1 bar, vorzugsweise im Bereich von 0,03 bis 0,07 bar, und besonders bevorzugt im Bereich von 0,04 bis 0,06 bar. Mit anderen Worten, der eingangsseitige, im Wesentlichen konstante Überdruck wird durch die Luftzuführungsleitung 26 im genannten Beispiel zumindest etwa halbiert.

In analoger Weise sind ein Innendurchmesser d₂ und eine Länge l₂ der Luftabführungsleitung 28 so dimensioniert, dass bei Vorhandensein eines Unterdrucks im Unterdruckbehälter 12 der Druck in der Dichtungskammer 24 immer zwischen dem Unterdruck und dem die Wellendichtungsanordnung 10 umgebenden Atmosphärendruck liegt.

Bei atmosphärischem Betrieb, d. h. wenn im Unterdruckbehälter 12 Atmosphärendruck vorliegt, herrscht demnach in der Dichtungskammer 24 ein leichter Überdruck. Will man in einem solchen Betriebszustand eine permanente Spülung der Dichtungskammer 24 realisieren, wird in der Luftabführungsleitung 28 ein beispielsweise als Rückschlagventil ausgebildetes Überdruckventil 30 angeordnet, das jeglichen Überdruck aus der Luftabführungsleitung 28 ablässt. Zwischen der Dichtungskammer 24 und dem Überdruckventil 30 ist ein Durchflusswächter 32 angeordnet, mit dem der Gasdurchfluss in der Luftabführungsleitung 28 bestimmt werden kann.

In Betriebszuständen der Wellendichtungsanordnung 10, in denen im Unterdruckbehälter 12 Unterdruck vorliegt, verhindert das Überdruckventil 30 ein Ausströmen des Spülgases in die Atmosphäre. Stattdessen strömt die von der Druckluftquelle bereitgestellte Luft (oder ein anderes Spülgas) durch die Luftzuführungsleitung 26 in die Dichtungskammer 24 und aus ihr heraus durch die Luftabführungsleitung 28 in den Unterdruckbehälter 12. Zwar verringert diese in den Unterdruckbehälter 12 einströmende Luft den Unterdruck im Unterdruckbehälter 12 tendenziell, jedoch ist dies in der Praxis unkritisch, da die Leistung einer beispielhaft angegebenen Unterdruckquelle 34 groß genug ist, um dennoch einen gewünschten Unterdruck im Unterdruckbehälter 12 aufrechtzuerhalten.

Durch die dargestellte Drosselanordnung aus Luftzuführungsleitung 26 und Luftabführungsleitung 28 wird eine Begrenzung der an den Wellendichtungen 20 und 22 anliegenden Druckdifferenz auf maximal 0,5 bar selbst dann gewährleistet, wenn im Unterdruckbehälter 12 ein Unterdruck von nahezu 1 bar vorliegt. Im gezeigten Ausführungsbeispiel beträgt der Innendurchmesser d₁ der Luftzuführungsleitung 26 und der Innendurchmesser d₂ der Luftabführungsleitung 28 jeweils 4 mm, die Länge l₁ der Luftzuführungsleitung 26 beträgt 5,5 m, die Länge l₂ der Luftabführungsleitung 28 1,5 m. Diese Werte gelten für die gezeigte Wellendichtungsanordnung 10 bei einem eingangsseitigen Überdruck von 0,2 bar. Es versteht sich, dass d₁, d₂ sowie l₁ und l₂ in Abhängigkeit des eingangsseitigen Überdrucks und weiterer Parameter der Wellendichtungsanordnung 10, etwa der Größe der Dichtungskammer 24, variieren können.

Zur Gewährleistung eines ordnungsgemäßen Betriebs kann vorgesehen sein, dass eine Fehlermeldung und/oder ein Warnsignal ausgegeben wird, wenn der Durchflusswächter 32 eine Unterschreitung einer voreingestellten Mindestdurchflussmenge feststellt. Zu einer Unterschreitung einer voreingestellten Mindestdurchflussmenge kann es beispielsweise kommen, wenn die Luftzuführungsleitung 26 oder die Luftabführungsleitung 28 verstopft ist. In einem solchen Fall kann auch eine Notabschaltung des Vakuum-Dissolvers oder einer anderen der Wellendichtungsanordnung 10 zugehörigen Einrichtung erfolgen, um ein Überhitzen der Wellendichtungen 20, 22 zu verhindern.

Alternativ und/oder zusätzlich zum Durchflusswächter 32 können weitere Kontrollorgane vorhanden sein, z. B. ein Drucksensor 36 zum Erfassen des Drucks in der Dichtungskammer 24, ein Temperatursensor (nicht dargestellt) zum Erfassen der Temperatur der ersten Wellendichtung 20 und/oder ein Temperatursensor (nicht dargestellt) zum Erfassen der Temperatur der zweiten Wellendichtung 22.

Schließlich kann der von der Druckluftquelle bereitgestellte Überdruck mittels eines Druckminderers 38 auf einen gewünschten eingangsseitigen Wert eingestellt werden.

## Patentansprüche

1. Wellendichtungsanordnung (10), insbesondere für Vakuum-Dissolver, mit:
- einem Unterdruckbehälter (12),
- einer Welle (14), die einen sich in den Unterdruckbehälter (12) erstreckenden Endabschnitt (16) und einen außerhalb des Unterdruckbehälters (12) befindlichen Antriebsabschnitt (18) aufweist, der zur Verbindung mit einem Drehantrieb vorgesehen ist,
**dadurch gekennzeichnet, dass** die Wellendichtungsanordnung umfasst:
- einer ersten, antriebsabschnittseitigen Wellendichtung (20) und einer zweiten, unterdruckbehälterseitigen Wellendichtung (22), die zwischen sich eine Dichtungskammer (24) begrenzen,
- einer Luftzuführungsleitung (26) mit einem Innendurchmesser (d₁) und einer Länge (ℓ₁), die zur Verbindung mit einer Druckluftquelle mit einem im Wesentlichen konstanten Überdruck vorgesehen ist und die in der Dichtungskammer (24) endet,
- einer Luftabführungsleitung (28) mit einem Innendurchmesser (d₂) und einer Länge (ℓ₂), die die Dichtungskammer (24) mit dem Unterdruckbehälter (12) verbindet, wobei der Innendurchmesser (d₁) und die Länge (ℓ₁) der Luftzuführungsleitung (26) solchermaßen dimensioniert sind, dass bei Atmosphärendruck im Unterdruckbehälter (12) der im Wesentlichen konstante Überdruck der Druckluftquelle am dichtungskammerseitigen Ende der Luftzuführungsleitung auf einen geringfügigen Überdruck reduziert ist, und wobei der Innendurchmesser (d₂) und die Länge (ℓ₂) der Luftabführungsleitung (28) solchermaßen dimensioniert sind, dass bei Vorhandensein eines Unterdrucks im Unterdruckbehälter (12) der Druck in der Dichtungskammer (24) immer zwischen dem Unterdruck und Atmosphärendruck liegt.

2. Wellendichtungsanordnung nach Anspruch 1,
**dadurch gekennzeichnet, dass** die Luftabführungsleitung (28) ein Überdruckventil (30) enthält, das jeglichen Überdruck aus der Luftabführungsleitung ablässt.

3. Wellendichtungsanordnung nach Anspruch 1 oder 2,
**dadurch gekennzeichnet, dass** der im Wesentlichen konstante Überdruck 0,2 bar beträgt.

4. Wellendichtungsanordnung nach einem der Ansprüche 1 bis 3,
**dadurch gekennzeichnet, dass** der geringfügige Überdruck im Bereich von 0,01 bis 0,1 bar liegt, vorzugsweise im Bereich von 0,03 bis 0,07 bar, und besonders bevorzugt im Bereich von 0,04 bis 0,06 bar.

5. Wellendichtungsanordnung nach einem der vorhergehenden Ansprüche,
**dadurch gekennzeichnet, dass** in der Luftabführungsleitung (28) an der Dichtungskammer (24) oder nahe derselben ein Durchflusswächter (32) angeordnet ist.

6. Wellendichtungsanordnung nach Anspruch 5,
**dadurch gekennzeichnet, dass** die Ausgabe einer Fehlermeldung und/oder eines Warnsignals erfolgt, wenn der Durchflusswächter (32) eine Unterschreitung einer voreingestellten Mindestdurchflussmenge feststellt.

7. Wellendichtungsanordnung nach einem der vorhergehenden Ansprüche,
**dadurch gekennzeichnet, dass** ein Drucksensor zum Erfassen des Drucks in der Dichtungskammer (24) vorhanden ist.

8. Wellendichtungsanordnung nach einem der vorhergehenden Ansprüche,
**dadurch gekennzeichnet, dass** ein Temperatursensor zum Erfassen der Temperatur der ersten Wellendichtung (20) vorhanden ist.

9. Wellendichtungsanordnung nach einem der vorhergehenden Ansprüche,
**dadurch gekennzeichnet, dass** ein Temperatursensor zum Erfassen der Temperatur der zweiten Wellendichtung (22) vorhanden ist.

10. Wellendichtungsanordnung nach einem der vorhergehenden Ansprüche,
**dadurch gekennzeichnet, dass** die erste Wellendichtung (20) und/oder die zweite Wellendichtung (22) jeweils ein Wellendichtring ist.

## Claims

1. A shaft sealing arrangement (10), in particular for vacuum dissolvers, comprising:
- a low-pressure container (12),
- a shaft (14) which comprises an end section (16) extending into the low-pressure container (12) and a drive section (18) located outside the low-pressure container (12), which drive section is provided for connection to a rotary drive,
**characterised in that** the shaft sealing arrangement comprises:
- a first shaft seal (20) on the drive-section side and a second shaft seal (22) on the low-pressure container side, which bound between them a sealing chamber (24),
- an air supply line (26) with an internal diameter (d₁) and a length (ℓ₁), which is provided for connection to a compressed air source with an essentially constant excess pressure and which ends in the sealing chamber (24),
- an air discharge line (28) with an internal diameter (d₂) and a length (ℓ₂), which connects the sealing chamber (24) to the low-pressure container (12), wherein the internal diameter (d₁) and the length (ℓ₁) of the air supply line (26) are dimensioned such that, in the presence of atmospheric pressure in the low-pressure container (12), the essentially constant excess pressure of the compressed air source is reduced to a slight excess pressure at the end of the air supply line on the sealing-chamber side, and wherein the internal diameter (d₂) and the length (ℓ₂) of the air discharge line (28) are dimensioned such that, in the presence of a low pressure in the low-pressure container (12), the pressure in the sealing chamber (24) always lies between the low pressure and atmospheric pressure.

2. The sealing shaft arrangement according to claim 1,
**characterised in that** the air supply line (28) contains a pressure relief valve (30), which releases any excess pressure from the air discharge line.

3. The sealing shaft arrangement according to claim 1 or 2,
**characterised in that** the essentially constant excess pressure amounts to 0.2 bar.

4. The sealing shaft arrangement according to any one of claims 1 to 3,
**characterised in that** the slight excess pressure lies in the range from 0.01 to 0.1 bar, preferably in the range from 0.03 to 0.07 bar, and particularly preferably in the range from 0.04 to 0.06 bar.

5. The sealing shaft arrangement according to any one of the preceding claims,
**characterised in that** a flow monitor (32) is arranged in the air discharge line (28) at the sealing chamber (24) or close to the latter.

6. The sealing shaft arrangement according to claim 5,
**characterised in that** the outputting of an error message and/or a warning signal takes place when the flow monitor (32) ascertains that a pre-adjusted minimum flow quantity is fallen below.

7. The sealing shaft arrangement according to any one of the preceding claims,
**characterised in that** a pressure sensor is provided for detecting the pressure in the sealing chamber (24).

8. The sealing shaft arrangement according to any one of the preceding claims,
**characterised in that** a temperature sensor is provided for detecting the temperature of the first shaft seal (20) .

9. The sealing shaft arrangement according to any one of the preceding claims,
**characterised in that** a temperature sensor is provided for detecting the temperature of the second shaft seal (22) .

10. The sealing shaft arrangement according to any one of the preceding claims,
**characterised in that** the first shaft seal (20) and/or the second shaft seal (22) is in each case a shaft sealing ring.

## Revendications

1. Agencement de joints d'arbre (10), destiné notamment à un appareil de dissolution sous vide, comprenant :
un réservoir sous dépression (12),
- un arbre (14), qui comporte un tronçon d'extrémité (16) s'étendant dans le réservoir sous dépression (12) et un tronçon d'entraînement (18) se trouvant à l'extérieur du réservoir sous dépression (12), qui est prévu pour être relié avec un entraînement en rotation,
**caractérisé en ce que** l'agencement de joints d'arbre comprend :
- un premier joint d'arbre (20) du côté du tronçon d'entraînement et un deuxième joint d'arbre (22) du côté du réservoir sous dépression, qui délimitent entre eux une chambre d'étanchéité (24),
- un conduit d'alimentation d'air (26) avec un diamètre intérieur (d₁) et une longueur (ℓ₁), qui pour une liaison sur une source d'air comprimé est prévu avec une surpression sensiblement constante et qui se termine dans la chambre d'étanchéité (24),
- un conduit d'évacuation d'air (28) avec un diamètre intérieur (d₂) et une longueur (ℓ₂), qui relie la chambre d'étanchéité (24) avec le réservoir sous dépression (12), le diamètre intérieur (d₁) et la longueur (ℓ₁) du conduit d'alimentation d'air (26) étant dimensionnés de telle sorte, que lorsque le réservoir sous dépression (12) se trouve sous pression atmosphérique, la dépression sensiblement constante de la source d'air comprimé soit réduite sur l'extrémité du côté de la chambre d'étanchéité du conduit d'alimentation d'air à une faible surpression, et le diamètre intérieur (d₂) et la longueur (ℓ₂) du conduit d'évacuation d'air (28) étant dimensionnés de telle sorte, qu'en présence d'une dépression dans le réservoir sous dépression (12), la pression dans la chambre d'étanchéité (24) se situe toujours entre la dépression et la pression atmosphérique.

2. Agencement de joints d'arbre selon la revendication 1,
**caractérisé en ce que** le conduit d'évacuation d'air (28) contient une soupape de surpression (30), qui évacue toute surpression hors du conduit d'évacuation d'air.

3. Agencement de joints d'arbre selon la revendication 1 ou 2,
**caractérisé en ce que** la surpression sensiblement constante s'élève à 0,2 bar.

4. Agencement de joints d'arbre selon l'une quelconque des revendications 1 à 3,
**caractérisé en ce que** la faible surpression se situe dans l'ordre de 0,01 à 0,1 bar, de préférence dans l'ordre de 0,03 à 0,07 bar, et de manière particulièrement préférentielle, dans l'ordre de 0,04 à 0,06 bar.

5. Agencement de joints d'arbre selon l'une quelconque des revendications précédentes,
**caractérisé en ce que** dans le conduit d'évacuation d'air (28), sur la chambre d'étanchéité (24) ou à proximité de celle-ci est placé un contrôleur de débit (32).

6. Agencement de joints d'arbre selon la revendication 5,
**caractérisé en ce que** la délivrance d'un message de défaut et/ou d'un signal d'avertissement a lieu, lorsque le contrôleur de débit (32) constate une non-atteinte d'un volume de débit préréglé.

7. Agencement de joints d'arbre selon l'une quelconque des revendications précédentes,
**caractérisé en ce qu'**un capteur de pression est présent pour détecter la pression dans la chambre d'étanchéité (24) .

8. Agencement de joints d'arbre selon l'une quelconque des revendications précédentes,
**caractérisé en ce qu'**un capteur de température est présent pour détecter la température du premier joint d'arbre (20).

9. Agencement de joints d'arbre selon l'une quelconque des revendications précédentes,
**caractérisé en ce qu'**un capteur de température est présent pour détecter la température du deuxième joint d'arbre (22).

10. Agencement de joints d'arbre selon l'une quelconque des revendications précédentes,
**caractérisé en ce que** le premier joint d'arbre (20) et/ou le deuxième joint d'arbre (22) est respectivement un joint à lèvre.
